# EUROPEAN PATENT SPECIFICATION

(11) **EP 1 902 100 B1**
(45) Date of publication and mention of the grant of the patent: **21.05.2014**
(21) Application number: 06763935.1
(22) Date of filing: 28.06.2006
(51) Int. Cl.: C09B 62/44

(54) **REACTIVE DYES, A PROCESS FOR THEIR PREPARATION AND THEIR USE**
REAKTIVFARBSTOFFE, DEREN HERSTELLUNG UND DEREN VERWENDUNG
COLORANTS REACTIFS, LEUR PROCEDE DE PREPARATION ET D'UTILISATION

(30) Priority: 08.07.2005 EP 05106239
(43) Date of publication of application: 26.03.2008
(73) Proprietor: Huntsman Advanced Materials (Switzerland) GmbH, 4057 Basel (CH)
(72) Inventor: ROENTGEN, Georg, 79104 Freiburg (DE); MUMALO, Dragana, CH-4103 Bottmingen (CH); FEKETE, Laszlo, CH-4312 Magden (CH)
(86) International application number: PCT/EP2006/063639
(87) International publication number: WO 2007/006653

(56) References cited:
- EP-A- 0 545 219
- EP-A1- 0 052 985
- EP-A1- 0 357 915
- EP-A1- 0 576 026
- EP-A2- 0 568 874
- WO-A-03/044095
- GB-A- 2 347 935
- DATABASE WPI Week 198702 Derwent Publications Ltd., London, GB; AN 1987-012647 XP002439944 & JP 61 272269 A (MITSUBISHI CHEM IND LTD) 2 December 1986 (1986-12-02) cited in the application

## Description

The present invention relates to novel reactive dyes, to a process for their preparation and to their use in the dyeing or printing of textile fibre materials.

The practice of dyeing using reactive dyes has recently led to higher demands being made on the quality of the dyeings and the economic efficiency of the dyeing process. As a result, there continues to be a need for novel reactive dyes having improved properties, especially in respect of their application.

Dyeing today requires reactive dyes that have sufficient substantivity and at the same time have good ease of washing-off of unfixed dye. In addition, they should exhibit good colour yield and high reactivity, the objective being especially to provide dyeings having high degrees of fixing. The known dyes do not satisfy those requirements in all properties.

Monoazo dyes containing both vinylsulfone-type and halo-substituted triazine fibre reactive groups are described in GB-A 2 347 935, EP-A 0 576 026 and WO 03/044095.
Similar bisazo reactive dyes are known from EP-A 0 545 219, EP-A 0 568 874 and EP-A 0 357 915.
The dyes described in the prior art, such as, for example, the dyes from US 4 841031, US 4 937 326 and JP 61-272 269, still have certain disadvantages in respect of the required properties.

The problem underlying the present invention is accordingly to find, for the dyeing and printing of fibre materials, improved reactive dyes that possess the above-mentioned qualities to a high degree. The novel dyes should be distinguished especially by high fixing yields and high fibre-dye binding stability properties, and in addition it should be possible for dye that is not fixed on the fibres to be washed off easily. The dyes should also yield dyeings having good all-round fastness properties, for example fastness to light and to wetting.

It has been found that the problem posed is largely solved by the dyes defined hereinbelow.

The present invention accordingly relates to reactive dyes of formula 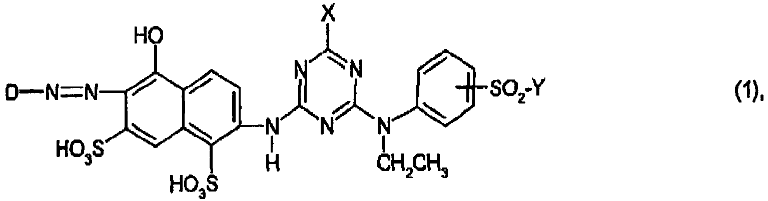 wherein
D is a radical of formula 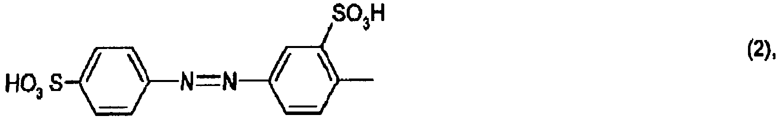 X is halogen, and
Y is vinyl or β-sulfatoethyl.

For X, there comes into consideration, for example, fluorine, chlorine or bromine, preferably fluorine or chlorine and specially chlorine.

The dye of formula (1) is preferably a dye of formula 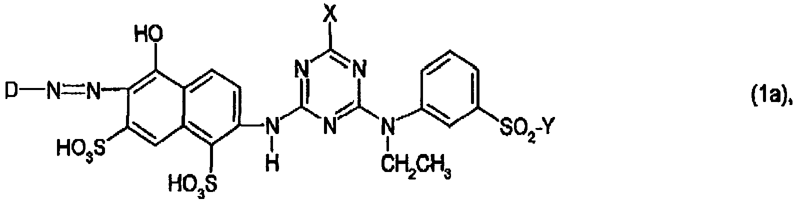 wherein D, X and Y each have the definitions and preferred meanings given above.

The present invention relates also to a process for the preparation of the reactive dyes according to the invention wherein
(i) a compound of formula 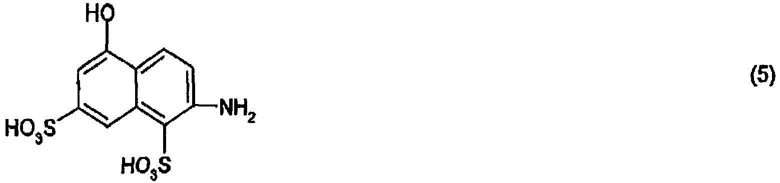 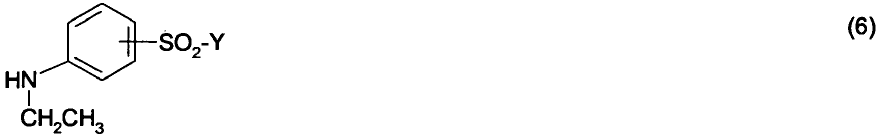 are reacted in any order with cyanuric halide and
(ii) there is coupled to the resulting compound of formula 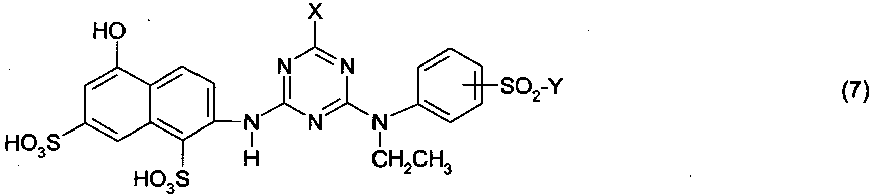 an amine of formula

   D-NH₂ (8),

   wherein D, X and Y each have the definitions and preferred meanings given above.

Since process step (i) indicated above can be carried out in a different order, two different process variants are possible. Thus, for example, approximately one molar equivalent of a compound of formula (6) is reacted with approximately one molar equivalent of cyanuric halide, and the product obtained is then condensed with approximately one molar equivalent of a compound of formula (5). In a preferred process variant, approximately one molar equivalent of a compound of formula (5) is reacted with approximately one molar equivalent of cyanuric halide and the condensation product obtained is then condensed with approximately one molar equivalent of a compound of formula (6). Instead of the compound of formula (5), it is also possible for the coupling product thereof of formula 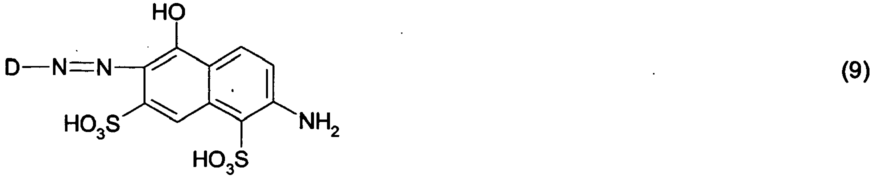 to be used, in which case process step (ii) is omitted. The compound of formula (9) can be obtained by diazotization of an amine of formula (8) and coupling of the diazonium salt to a compound of formula (5).

A suitable compound of formula (6) is preferably the compound of formula

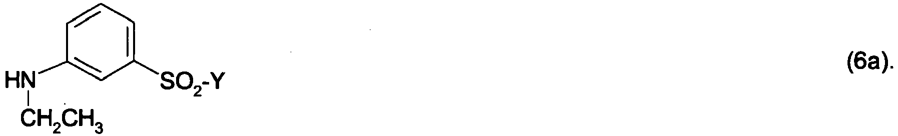

A suitable cyanuric halide is, for example, cyanuric chloride or cyanuric fluoride, especially cyanuric chloride.

The individual condensation reactions are carried out, for example, according to processes known *per se,* usually in aqueous solution, at a temperature of, for example, from 0 to 50°C, especially from 0 to 30°C, and at a pH value of, for example, from 2 to 10, especially from 2 to 6.

The diazotization of the amine of formula (8) is carried out in customary manner, for example using a nitrite, e.g. an alkali metal nitrite, such as sodium nitrite, in a mineral acid medium, for example a hydrochloric acid medium, at temperatures of, for example, from -5 to 40°C, preferably at from 0 to 25°C.

The coupling to the coupling component of formula (5) or (7) is carried out in a manner known *per se* at acid or neutral to weakly alkaline pH values, for example at a pH of from 1 to 10, advantageous at a pH of from 3 to 7, and at temperatures of, for example, from -5 to 40°C, preferably from 0 to 35°C.

The end product can optionally, in addition, be subjected to a conversion reaction. Such a conversion reaction is, for example, the conversion of a vinylatable reactive group present in Y into its vinyl form by treatment with dilute sodium hydroxide solution, such as the conversion of the β-sulfatoethylsulfonyl group into the vinylsulfonyl radical. Such reactions are known *per se*.

The compounds of formula (5), (6) and (8) are known or can be prepared in analogy to known compounds.

The reactive dyes of formula (1) according to the invention are either in the form of the free acid or, preferably, in the form of a salt thereof. Salts that come into consideration are, for example, alkali metal, alkaline earth metal and ammonium salts, and salts of organic amines. Sodium, lithium, potassium and ammonium salts and salts of mono-, di- and triethanolamine may be mentioned as examples.

The compounds of formula (1) according to the invention are suitable as dyes for dyeing and printing an extremely wide variety of materials, such as hydroxyl-group-containing or nitrogen-containing fibre materials. Examples of nitrogen-containing fibre materials that may be mentioned are silk, leather, wool, polyamide fibres and polyurethanes. The reactive dyes according to the invention are suitable especially for dyeing and printing cellulose-containing fibre materials of all kinds. Such cellulose-containing fibre materials are, for example, the natural cellulosic fibres, such as cotton, linen and hemp, and also cellulose and regenerated cellulose, preferably cotton. The reactive dyes according to the invention are also suitable for dyeing or printing cellulosic blend fabrics, for example mixtures of cotton and polyamide fibres or especially cotton/polyester blend fibres.

The reactive dyes according to the invention can be applied to the fibre material and fixed to the fibre in a variety of ways, especially in the form of aqueous dye solutions and dye print pastes. They are suitable both for the exhaust method and for dyeing in accordance with the pad-dyeing method, according to which the goods are impregnated with aqueous, optionally salt-containing, dye solutions and, after treatment with alkali or in the presence of alkali, the dyes are fixed, where appropriate with the action of heat or by storing for several hours at room temperature. After fixing, the dyeings or prints are rinsed thoroughly with cold and hot water, optionally with the addition of an agent that has a dispersing action and promotes the diffusion of unfixed dye.

The reactive dyes according to the invention are distinguished by high reactivity, good fixing ability and a very good build-up behaviour. They can accordingly be used in accordance with the exhaust dyeing method at low dyeing temperatures and require only short steaming times in the pad-steam method. The degrees of fixing are high and unfixed dye can be washed off easily, the difference between the degree of exhaust and the degree of fixing being remarkably small, that is to say the soaping loss being very low. The dyes according to the invention are also suitable especially for printing, more especially on cotton, but are equally suitable also for printing nitrogen-containing fibres, for example wool or silk or blend fabrics that include wool or silk.

The dyeings and prints produced using the reactive dyes according to the invention have a high tinctorial strength and a high fibre-dye binding stability in both the acidic and the alkaline range, and furthermore have good fastness to light and very good wet-fastness properties, such as fastness to washing, to water, to sea water, to cross-dyeing and to perspiration, as well as good fastness to chlorine, to pleating, to hot-pressing and to rubbing.

The reactive dyes according to the invention are also suitable as colorants for use in recording systems. Such recording systems are, for example, commercially available inkjet printers for paper or textile printing, or writing instruments, such as fountain pens or ballpoint pens, and especially inkjet printers. For that purpose, the reactive dye according to the invention is first brought into a form suitable for use in recording systems. A suitable form is, for example, an aqueous ink that comprises the reactive dyes according to the invention as colorant. The inks can be prepared in customary manner by mixing together the individual components customary in inkjet printing in the desired amount of water.

Substrates that come into consideration for the inkjet printing include, besides paper or plastics films, for example the above-mentioned hydroxyl-group-containing or nitrogen-containing fibre materials, especially cellulose-containing fibre materials. The fibre materials are preferably textile fibre materials.

The following Examples serve to illustrate the invention. Unless otherwise indicated, the temperatures are given in degrees Celsius, parts are parts by weight and percentages relate to percent by weight. Parts by weight relate to parts by volume in a ratio of kilograms to litres.

### Example 1:

a) 94.5 parts of cyanuric chloride are stirred vigorously in 750 parts of an ice-water mixture with the addition of a wetting agent and 0.5 part of disodium hydrogen phosphate, and the mixture is adjusted to pH 2.5 using 32% hydrochloric acid. A neutral solution of 160 parts of 2-amino-5-naphthol-1,7-disulfonic acid in 600 parts of water is then added thereto, the temperature of the reaction mixture being maintained at from 0 to 2°C and the pH value at 2.5. The pH of the reaction mixture is then increased to 4 using sodium hydroxide solution (30%).
b) A neutral solution of 162 parts of the compound of formula 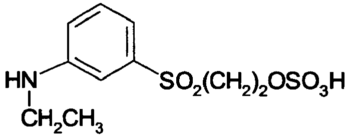 in 800 parts of water is added at 8°C to the reaction mixture obtained according to a), the pH being maintained at approximately 4.5 by addition of a sodium carbonate solution (20%). After the addition, the reaction mixture is heated to 30°C and stirred overnight.
c) 179 parts of 4-aminoazobenzol-3,4'-disulfonic acid are stirred into 750 parts of water, and 170 parts of ice and 139.2 parts of 32% hydrochloric acid are added to the mixture. 113 parts by volume of a 4N sodium nitrite solution are then added dropwise to the mixture and stirring is subsequently carried out for a brief period in order to complete the reaction. Excess sodium nitrite is destroyed using sulfamic acid.
d) The suspension of the diazonium salt obtained according to c) is metered into the reaction mixture obtained according to b), the pH of which is adjusted to 7 by adding sodium carbonate solution (20%), the temperature of the reaction mixture being maintained value is then adjusted to 6.3 using hydrochloric acid, and the reaction mixture obtained is filtered until dear, freed of salt by dialysis and concentrated. 780 parts of a compound is obtained which, in the form of the free acid, corresponds to formula 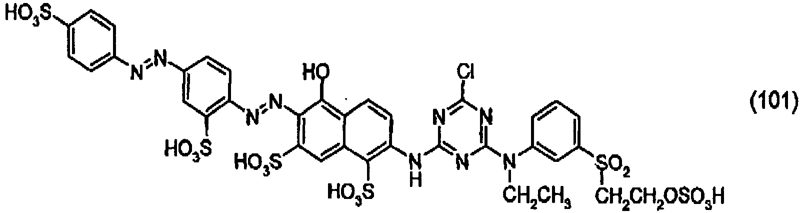 (λₘₐₓ: 508 nm) and which dyes cotton in a red shade having good all-round fastness properties.

### Dyeing procedure I

100 parts of cotton fabric are introduced at 60°C into 1500 parts of a dye bath containing 45 g/l of sodium chloride and 2 parts of the reactive dye obtained according to Example 1. After 45 minutes at 60°C, 20 g/l of anhydrous sodium carbonate are added. Dyeing is continued for a further 45 minutes at that temperature. The dyed goods are then rinsed, soaped at the boil for a quarter of an hour with a non-ionic detergent, rinsed again and dried.

As an alternative to the above procedure, the dyeing can be carried out at 80°C instead of at 60°C.

### Dyeing procedure II

0.1 part of the dye according to Example 1 is dissolved in 200 parts of water, and 0.5 part of sodium sulfate, 0.1 part of a levelling adjuvant (based on the condensation product of a higher aliphatic amine and ethylene oxide) and also 0.5 part of sodium acetate are added. The pH is then adjusted to a value of 5.5 using acetic acid (80%). The dye bath is heated at 50°C for 10 minutes and then 10 parts of a woollen fabric are added. Heating is then carried out, over the course of approximately 50 minutes, to a temperature of 100°C and dyeing is carried out at that temperature for 60 minutes, after which the dye bath is allowed to cool to 90°C and the dyed goods are removed. The woollen fabric is washed with hot and cold water, and is then spun and dried.

### Printing procedure

3 parts of the dye obtained according to Example 1 are sprinkled, with rapid stirring, into 100 parts of a stock thickener containing 50 parts of 5% sodium alginate thickener, 27.8 parts of water, 20 parts of urea, 1 part of sodium m-nitrobenzenesulfonate and 1.2 parts of sodium hydrogen carbonate. The print paste so obtained is used to print a cotton fabric, and the resulting printed material is dried and steamed in saturated steam for 2 minutes at 102°C. The printed fabric is then rinsed, if desired soaped at the boil and rinsed again, and subsequently dried.

## Claims

1. A reactive dye of formula 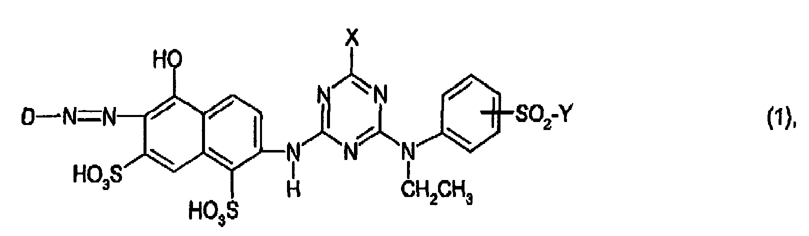 wherein
D is a radical of formula 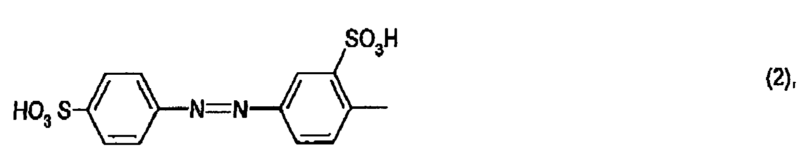 X is halogen, and
Y is vinyl or β-sulfatoethyl.

2. A reactive dye according to claim 1, wherein
X is chlorine.

3. A process for the preparation of a reactive dye according to claim 1, wherein
(i) a compound of formula 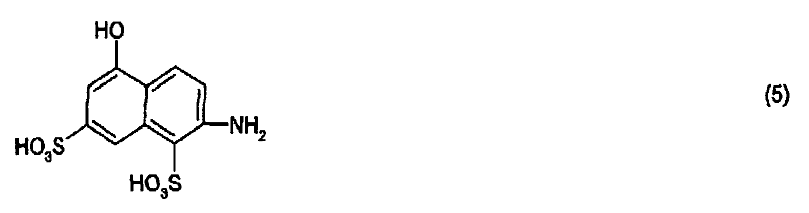 and a compound of formula 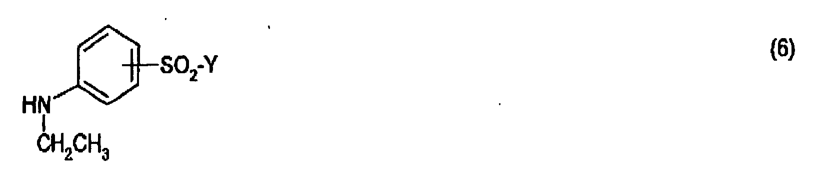 are reacted in any order with cyanuric halide and
(ii) there is coupled to the resulting compound of formula 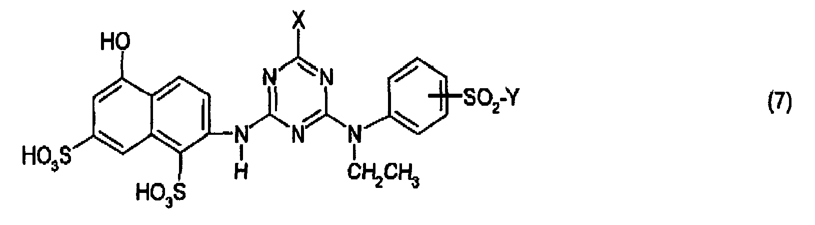 an amine of formula
D-NH₂ (8),
wherein D, X and Y are each as defined in claim 1.

4. Use of a reactive dye according to claim 1 or 2 or of a reactive dye prepared according to claim 3 in the dyeing or printing of hydroxyl-group-containing or nitrogen-containing fibre material.

5. Use according to claim 4, wherein cellulose-rontaining fibre material, especially cotton-containing fibre material, is dyed or printed.

## Patentansprüche

1. Reaktivfarbstoff der Formel 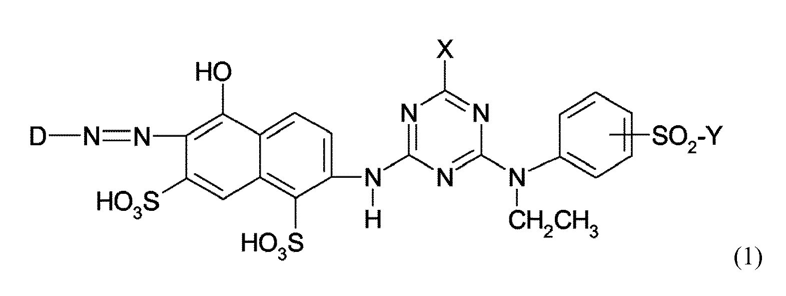 worin
D einen Rest der Formel 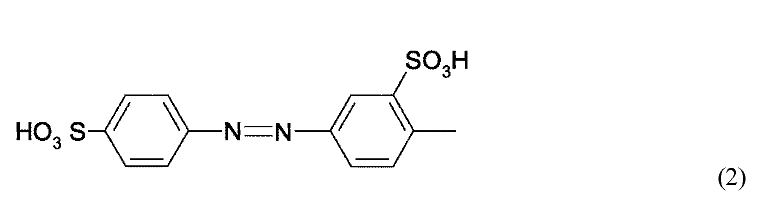 darstellt,
X Halogen ist und
Y Vinyl oder β-Sulfatoethyl ist.

2. Reaktivfarbstoff nach Anspruch 1, worin
X Chlor ist.

3. Verfahren zur Herstellung eines Reaktivfarbstoffs nach Anspruch 1, worin
(i) eine Verbindung der Formel 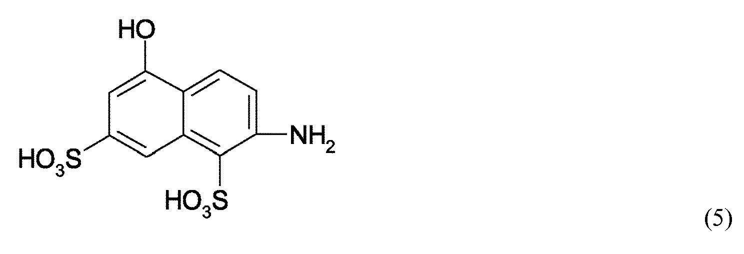 und eine Verbindung der Formel 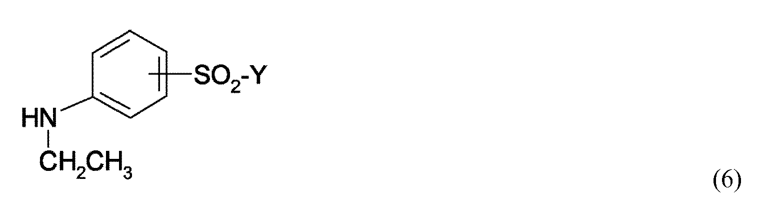 in irgendeiner Reihenfolge mit Cyanursäurehalogenid umgesetzt werden und
(ii) an die resultierende Verbindung der Formel 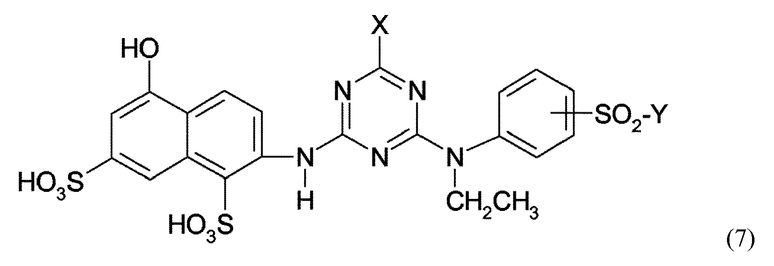 ein Amin der Formel
D-NH₂ (8)
worin D, X und Y je nach Anspruch 1 definiert sind, gekoppelt wird.

4. Verwendung eines Reaktivfarbstoffs nach Anspruch 1 oder Anspruch 2 oder eines Reaktivfarbstoffs, welcher gemäß Anspruch 3 hergestellt ist, zum Färben oder Bedrucken von Hydroxylgruppen enthaltenden oder stickstoffhaltigen Fasermaterialien.

5. Verwendung nach Anspruch 4, worin Cellulose enthaltendes Fasermaterial, insbesondere baumwollhaltiges Fasermaterial, gefärbt oder bedruckt wird.

## Revendications

1. Colorant réactif de formule : 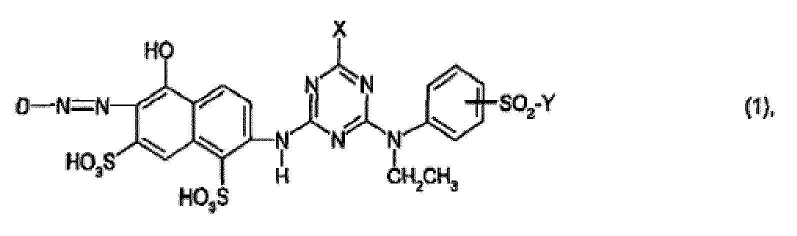 dans laquelle :
- D représente un radical de formule : 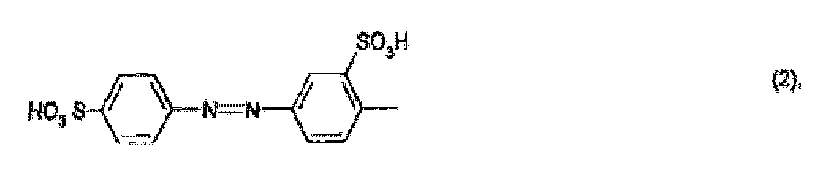
- X représente halogène ; et
- Y représente vinyle ou β-sulfatoéthyle.

2. Colorant réactif selon la revendication 1, dans lequel X représente chlore.

3. Procédé pour la préparation d'un colorant réactif selon la revendication 1, dans lequel :
(i) un composé de formule : 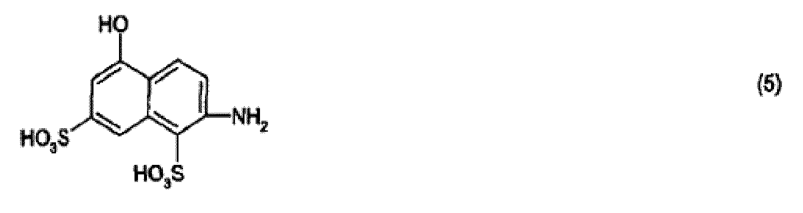 et un composé de formule : 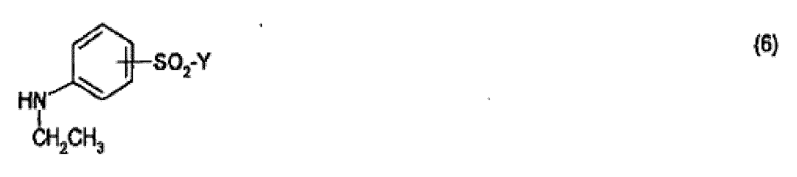 sont mis à réagir dans n'importe quel ordre avec un halogénure cyanurique et
(ii) est couplée au composé résultant de formule : 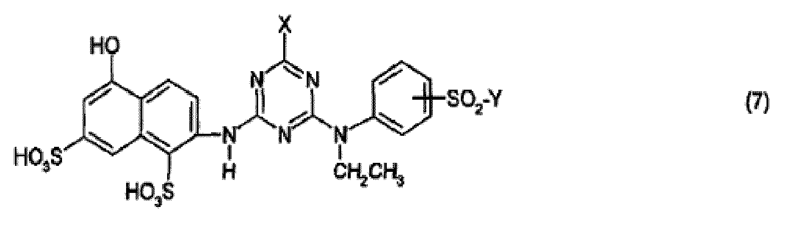 une amine de formule :
D-NH₂ (8),
D, X et Y étant tels que définis dans la revendication 1.

4. Utilisation d'un colorant réactif selon l'une des revendications 1 ou 2 ou d'un colorant réactif préparé selon la revendication 3 dans la teinture ou l'impression d'une matière fibreuse à teneur en groupe hydroxyle ou à teneur en azote.

5. Utilisation selon la revendication 4, dans laquelle une matière fibreuse contenant de la cellulose, notamment une matière fibreuse contenant du coton, est teinte ou imprimée.
